# EUROPEAN PATENT APPLICATION

(11) **EP 1 017 212 A2**
(43) Date of publication of application: **05.07.2000**
(21) Application number: 99309835.9
(22) Date of filing: 07.12.1999
(51) Int. Cl.: H04M 3/42, H04M 3/493

(54) **System and method for supporting simultaneous user access to subscribed telephone services from multiple locations**

(30) Priority: 31.12.1998 US 223879
(71) Applicant: NORTEL NETWORKS CORPORATION, Montreal, Quebec H2Y 3Y4 (CA)
(72) Inventor: Christie IV, Samuel H., Cary, North Carolina 27513 (US)
(74) Representative: Dearling, Bruce Clive

(57) **Abstract**

An intermittent extension service that is a mechanism for temporarily adding a member to a multi-appearance directory number type of service (e.g., EKTS or MADN) without sacrificing security. Service subscription data identifies the subscriber as having ordered a specific number of simultaneous extensions. The number of extensions is then provisioned by appropriate network resources. Thereafter, whenever a subscriber wishes, they can activate an additional extension by causing it to register with the telephone network. Similarly, the subscriber can de-activate extensions located where it is known that there is no one present to answer the phone when it rings. Thus, the subscriber is given the ability to provision and manage the physical locations of clients for the number of extensions ordered from the service provider.

## Description

### Technical Field

The present invention relates to multiple appearance directory number (MADN) systems. More specifically, the present invention relates to multiple appearance directory number systems capable of being implemented intermittently across multiple telephone networks.

### Background and Related Art

Telephony subscribers often have multiple locations at which they would like to access a telephone network. Mobile phones, and desk sets at the home or office comprise three examples. The ability to have a single phone directory number (DN) and associated services at any, and possibly all, of these locations is desirable. Existing services such as BellCore's Electronic Key Telephone System (EKTS) (BellCore Generic Requirements Document: GR-205, Dec. 1995, and revision 1, Sep. 1997) and Northern Telecom's Multiple Appearance Directory Numbers (MADN) provide this capability, but only for physical terminals wired to a switch and with a *pre-provisioned* relationship between the loop and the directory number (DN). Further, EKTS and MADN are continuous running services meaning that the subscriber's directory number is continually mapped to the desired multiple locations. Continuous mapping requires that the resources needed to perform the mapping are dedicated to the service all the time.

Similarly, with IP telephony, a remote extension can be established but only at the expense of tying up network resources, even when the subscriber is not at home. No provisions are available for multiple registrations with the same alias.

In the case of cellular telephony, security concerns within mobile (wireless) networks cause service providers to monitor the use of cell phones. Simultaneous registration of a single phone in multiple locations is a clear indication of a security violation.

What is needed is a secure system that provides multiple appearance directory numbers in such a way that does not continuously tie up valuable network resources.

### Summary of the Invention

An intermittent extension service system is presented within a telephone network system permitting a subscriber to provision and manage a registration table of clients. The registration table is maintained in memory means within a zone manager coupled between a telephone network switch and a plurality of clients. A provisioning system allows a subscriber to manage the physical locations of each client for each allotted extension ordered from a service provider. The telephone network switch is coupled between the zone manager memory means and the provisioning system for communicating extension registration data from the provisioning system to the zone manager memory means. When an incoming call on a telephone network is received by the switch it is routed to each active, i.e. registered, extension.

Thus, the intermittent extension service of the present invention is a mechanism for temporarily adding a member to a multi-appearance directory number type of service (e.g., EKTS or MADN) without sacrificing security. A key enhancement over the prior art is the ability of the subscriber to provision and manage the terminals or clients which will receive the service rather than having the service provider provision and manage the service for each client.

Service subscription data identifies the subscriber as having ordered a specific number of simultaneous extensions just as in prior art systems. The number of extensions is then provisioned by the appropriate network resources. This is the only provisioning done by the service provider. Once the number of extensions ordered by the subscriber have been provisioned for by the service provider, it is up to the subscriber to provision each client individually to one of the ordered extensions until the number of ordered extensions (maximum number of appearances) has been reached. The subscriber activates additional extensions for new clients (terminals) by causing it to register with the telephone network. Subscribers to the intermittent extension service are identified by some type of security mechanism such as a Smart Card, or digital signature from, for instance, *ENTRUST*™ *Technologies.*

If the registration limit, i.e. maximum number of appearances, for the subscriber has not been reached, a new registration will be accepted. If the registration limit has been met or exceeded, then the subscriber is given the ability to bump one of their existing registrations using a web based procedure in favour of the new registration. While the subscriber has the ability to provision a new client at will, he cannot register locations which exceed the number of extensions he has ordered from the service provider. However, the subscriber is permitted to selectively manage the registered table by adding or deleting specific clients using the aforementioned web based procedure.

The present invention therefore advantageously provides a multiple appearance directory number (MADN) system implementable across a plurality of telephone networks. There is also provided a means for and a method of intermittently mapping, as opposed to a continuously mapping, a multiple appearance directory number (MADN) system.

### Brief Description of the Drawings

Exemplary embodiments of the present invention will now be described in relation to the accompanying drawings, in which:
**FIGURE 1** illustrates the messaging sequence among various hardware nodes describing the intermittent extension service of the present invention;
**FIGURE 2** is a table illustrating the name/alias, security information, and maximum number of appearances for an intermittent extension service subscriber; and
**FIGURE 3** is a table illustrating the name/alias and IP address of each location registration for an intermittent extension service subscriber.

### Detailed Description of the Invention

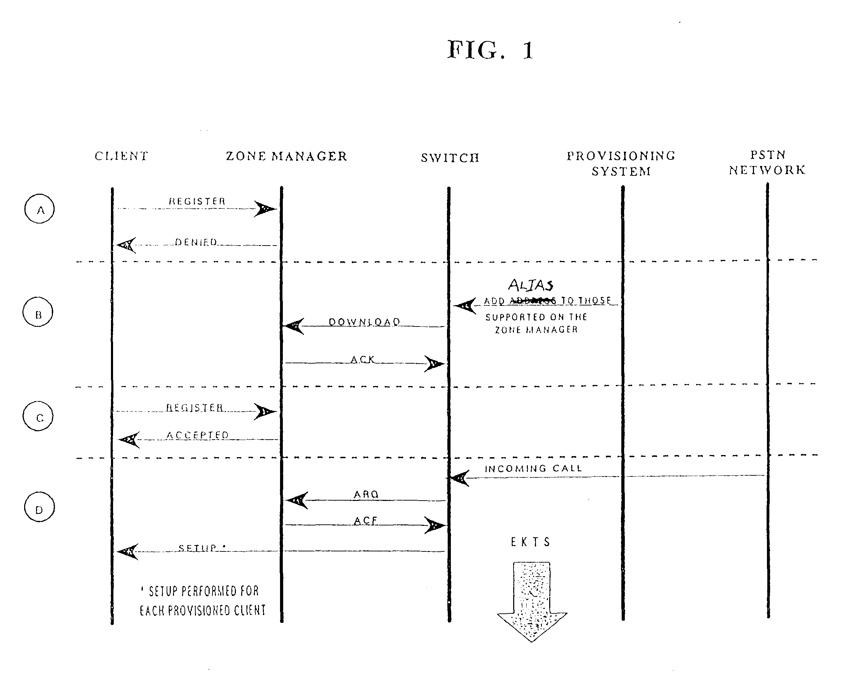

**FIGURE 1** illustrates a message sequence among various hardware nodes for provisioning, registering, and utilizing the intermittent extension service. The hardware nodes shown include a client, a zone manager, a network telephone switch, a provisioning system, and a PSTN network. Equivalents of each node may be substituted without departing from the scope of the present invention. For instance, the network telephone switch includes gateway functionality. The gateway may be internal or external to the switch. Moreover, the zone manager may also be referred to as a gatekeeper. In order to avoid confusion in the specification and claims the following terms are given the following meanings. A subscriber (or user) is an individual who has signed up for telephone service from a telephone service provider. A client is a terminal device such as a phone that is used by the subscriber to place and receive calls. The client is connected to the telephone network and its hardware.

**FIGURE 1** has been broken down into four distinct message groupings which have been designated **A, B, C**, and **D**. Group **A** represents a failed attempt by a subscriber to access and use the service. This may arise, for instance, when the subscriber attempts to use the service from a client that is not yet a member of the subscriber's current registered table. In this case, when the client attempts to automatically register the service with the zone manager, the zone manager returns a message indicating that the registration request is denied. If the subscriber still wishes to access the service from that client he must first make room for the client in the registered table by removing a previously registered client and then register the client with the zone manager. Message group **B** illustrates the provisioning process while message group **C** illustrates a successful registration process. The subscriber can remove a client registration by deactivating the client directly, deactivating via the web interface, or via an interactive voice response (IVR) system.

Aliases are provisioned by the service provider when the subscriber activates the intermittent extension service. The subscriber is allocated a maximum number of appearances, i.e., number of extensions, from the service provider. If the subscriber's current registration table utilizes all of the extensions he has ordered from the service provider, then the subscriber must choose one to delete in order to make room for the new client. The preferred embodiment deletion process is software driven from a web based application. The web based application guides the subscriber through a series of instructions that result in the subscriber viewing his particular registration table and deleting a client in the table in order to make room for a new client. Alternatively, the deletion process may be interactive voice response (IVR) driven. In this case, the subscriber calls the service provider and manipulates his registration table over the phone with voice responses to certain prompts. Once the subscriber is satisfied with his registration table, the provisioning system downloads the information to the zone manager that maintains a table with the subscriber's current intermittent extension service registration data. The zone manager responds with an acknowledgment message upon completion of the download. Subsequently, when the subscriber attempts to register a new client with the zone manager, the registration request will be automatically accepted since there is now room for an additional extension.

Message group **D** illustrates use of the intermittent extension service beginning when the switch receives an incoming call from a network (PSTN) and sends an authorization request (ARQ) message to the zone manager which returns an authorization confirmed (ACF) message back to the network telephone switch. The authorization request (ARQ) and authorization confirmed (ACF) messages serve to authenticate the nodes and grant admission to the call on a per call basis. Setup of the call to each registered client is then commenced with a setup message that originates in the switch and terminates at each client after being relayed through the zone manager. The setup messaging informs the clients that the switch is ready to initiate a call.

Once the above messaging has been completed, the remainder of the extension service processing may proceed according to, for instance, BellCore's prior art EKTS system as described in technical specification GR-205 previously cited.

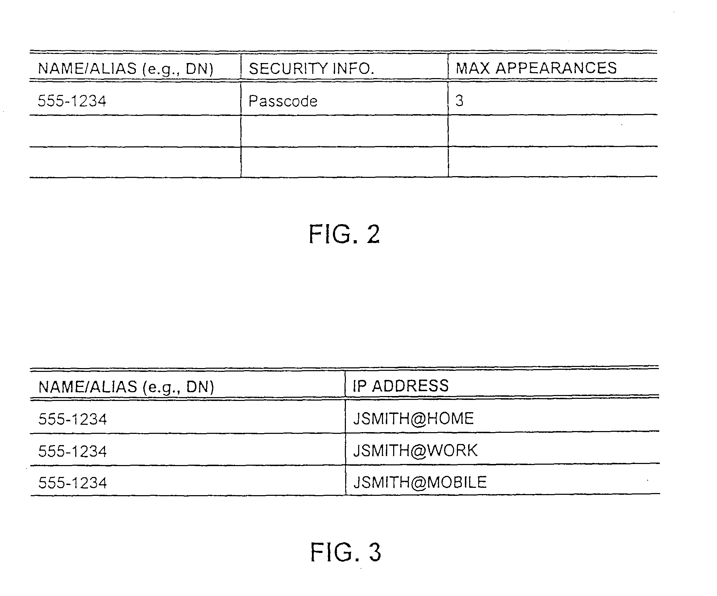

**FIGURE 2** is a table illustrating the name, security information, and maximum number of appearances for an intermittent extension service subscriber. Upon the subscriber ordering the intermittent extension service, the table is provisioned by appropriate network resources with the number of extensions ordered.

**FIGURE 3** is a table illustrating the name/alias and IP address of each client registration for an intermittent extension service subscriber. The table is dynamically allocated in the zone manager during the registration process described in **FIGURE 1**. The table contains cells corresponding a subscriber's name/alias, e.g., directory number, with an IP address identifying the physical location of the client. The maximum number of entries in the table depends on the number of extensions the subscriber has ordered for the intermittent extension service.

The above described system provides two significant advantages over prior art systems such as BellCore's EKTS. First, the service is capable of spanning multiple networks rather than being confined to physical locations that are all served by the same network. Second, the subscriber has control over the provisioning and registration process meaning they can register and de-register physical locations (clients) at will via a web-based software procedure over the Internet.

The web-based software procedure provides a user interface that guides the user/subscriber in the maintenance of his registration table. The user interface receives input from the subscriber in response to instructions designed to guide the subscriber through the process of managing his client registration data. Once the subscriber has manipulated the data to his satisfaction it is downloaded to the zone manager memory means where it is maintained. Access to the provisioning system interface is typically gained via a personal computer (PC) communicable with the interface's Internet web site via a data network. Standard security measures such as passcodes, digital signatures, or the like, can be employed to maintain system integrity.

While the total number of active registrations is limited by how many extensions the subscriber has actually ordered, the subscriber has the ability to manipulate the registration table. This is significant in that the subscriber can arrange it so that locations are not continuously mapped when there is not going to be anyone at a particular location to answer the phone even if it rings.

For instance, if a subscriber is on vacation they can opt to de-register the home location in favor of the temporary vacation location without incurring any more network resources. Upon return from vacation, the subscriber merely de-registers the vacation location and re-registers the home location.

The intermittent extension service could also be used to allow a small business to avoid the expense of a PBX switching network to manage calls. For example, say the business has subscribed for a single directory number (DN). With the intermittent extension service, the DN can be allotted a specific number of extensions, e.g. twelve (12). Thus, twelve clients may be provisioned throughout the office at various locations. A telephone receptionist can be given the responsibility of primary call answerer. Once the receptionist notifies the intended called party within the office, that person can pick up their phone (client) and conduct the call from their location. Moreover, one or more of the clients may be set up to ring outside the office as well. This is especially useful when the office is closed but someone would like to field calls at home, for instance. The registered client table may be accessed and manipulated to suit such purposes. This provides a cost effective means of achieving many of the results of the more expensive PBX systems.

It is to be understood that communication of each of the messages illustrated herein is readily implementable by those of ordinary skill in the art as a computer program product having a medium with a computer program embodied thereon. The computer program product is capable of being loaded and executed on the appropriate computer processing device(s) in order to carry out the method or process steps described.

An intermittent extension service that is a mechanism for temporarily adding a member to a multi-appearance directory number type of service (eg EKTS or MADN) without sacrificing security is presented. Service subscription data identifies the subscriber as having ordered a specific number of simultaneous extensions. The number of extensions is then provisioned by appropriate network resources. Thereafter, whenever a subscriber wishes they can activate an additional extension by causing it to register with the telephone network. Similarly, the subscriber can de-activate extensions located where it is known that there is no-one present to answer the terminal/phone when it rings. Thus, the subscriber is given the ability to provision and manage the physical locations of clients for the number of extensions ordered from the service provider. It is to be understood that the foregoing is illustrative of the present invention and is not to be construed as limited to the specific embodiments disclosed, and that modifications to the disclosed embodiments, as well as other embodiments, are intended to be included within the scope of the appended claims.

## Claims

1. An intermittent extension service system within a telephone network system for provisioning and managing a registration table of clients associated with the intermittent extension service system, said intermittent extension service system comprising:
memory means within a zone manager coupled between a telephone network switch and a plurality of clients, said memory means for maintaining a subscriber's client registration data; and
a provisioning system for allowing a subscriber to manage physical locations of clients for each allotted extension;
such that when a call is incoming from a telephone network to said switch, it is routed to each extension where a client is registered with said zone manager memory means.

2. The system of claim 1, further comprising gateway functionality coupled between said zone manager memory means and said provisioning system for communicating data from said provisioning system to said zone manager memory means.

3. The system of claim 1 or claim 2, wherein said provisioning system is comprised of a software driven Internet based interface wherein said interface receives input from the subscriber in response to instructions designed to guide the subscriber through a process of managing client registration data, and downloads the registration data to the zone manager memory means where it is maintained.

4. The system of claim 3 wherein access to said provisioning system interface is gained via a device communicable with the interface's Internet web site via a data network.

5. A method of providing an intermittent extension service within a telephone network system, the intermittent extension service for provisioning and managing a registration table of clients associated with the intermittent extension service, said method comprising the steps of:
provisioning one or more extension locations with data identifying a subscriber and a client;
storing the provisioned data in a zone manager's memory means, said zone manager communicable with said clients; and
registering each client with the zone manager,
such that when a call is incoming from a telephone network intended for a particular subscriber it is relayed to each client that is registered with the zone manager for that subscriber.

6. The method of claim 5 wherein said provisioning comprises the steps of:
accessing an Internet based interface maintained by a telephone service provider; and
utilizing the Internet based interface to manage a subscriber's registration data,
wherein said interface receives input from the subscriber in response to instructions designed to guide the subscriber through a process of managing client registration data, and downloads the registration data to the zone manager memory means where it is maintained.

7. The method of claim 6 wherein access to said Internet based interface is restricted by way of a passcode such that only a subscriber can gain access to and manipulate their registration table.

8. The method of claims 5, 6 or 7, wherein said provisioning step further comprises the ability to add or remove an extension location from the registered table.

9. A system for providing an intermittent extension service within a telephone network system, the intermittent extension service for provisioning and managing a registration table of clients associated with the intermittent extension service, said system comprising:
means for provisioning one or more extension locations with data identifying a subscriber and a client;
means for storing the provisioned data in a zone manager's memory means, said zone manager communicable with said clients; and
means for registering each client with the zone manager,
such that when a call is incoming from a telephone network intended for a particular subscriber it is relayed to each client that is registered with the zone manager for that subscriber.

10. The system of claim 9 wherein said means for provisioning further comprise means for adding or removing an extension location from the registration table.

11. The system of claim 9, 10 or 11 wherein said means for provisioning further comprise:
means for accessing an Internet based interface maintained by a telephone service provider; and
means for utilizing the Internet based interface to manage a subscriber's registration data,
wherein said interface receives input from the subscriber in response to instructions designed to guide the subscriber through a process of managing client registration data, and downloads the registration data to the zone manager memory means where it is maintained.

12. The system of claim 11 wherein access to said Internet based interface is restricted by way of a passcode such that only a subscriber can gain access to and manipulate their registration table.

13. The system of any one of claims 9 to 12, wherein said means for provisioning further comprises:
means for accessing an interactive voice response (IVR) based interface maintained by a telephone service provider; and
means for utilizing the interactive voice response (IVR) based interface to manage a subscriber's registration data,
wherein said interface receives voice input from the subscriber in response to audible instructions designed to guide the subscriber through a process of managing client registration data, and downloads the registration data to the zone manager memory means where it is maintained.

14. A computer program element comprising computer program code means to make a computer execute procedure to perform the steps of any one of claims 5 to 8.

15. The computer program element of claim 14, wherein this computer element further includes computer program code means to make the computer execute procedure to:
access an interactive voice response (IVR) based interface maintained by a telephone service provider; and
utilize the interactive voice response (IVR) based interface to manage a subscriber's registration data;
wherein said interface receives voice input from the subscriber in response to audible instructions designed to guide the subscriber through a process of managing client registration data, and downloads the registration data to the zone manager memory means where it is maintained.

16. The computer program element of claim 14 or 15, embodied on a computer readable medium.
